# FASCICULE DE BREVET EUROPEEN

(11) **EP 3 355 554 B1**
(45) Date de publication et mention de la délivrance du brevet: **24.07.2019**
(21) Numéro de dépôt: 18153449.6
(22) Date de dépôt: 25.01.2018
(51) Int. Cl.: H04L 29/06, H04B 7/185, H04W 56/00, H04W 88/16

(54) **PASSERELLE ÉLECTRONIQUE DE COMMUNICATION, INSTALLATION AVIONIQUE DE COMMUNICATION COMPRENANT UNE TELLE PASSERELLE, PROCÉDÉ DE TRAITEMENT D'INFORMATIONS ET PROGRAMME D'ORDINATEUR ASSOCIÉS**
ELEKTRONISCHE KOMMUNIKATIONSGATEWAY, LUFTFAHRT-KOMMUNIKATIONSANLAGE, DIE EINE SOLCHE GATEWAY UMFASST, ENTSPRECHENDES DATENVERARBEITUNGSVERFAHREN UND COMPUTERPROGRAMM
AN ELECTRONIC COMMUNICATION GATEWAY, AN AVIONICS COMMUNICATION INSTALLATION COMPRISING SUCH A GATEWAY, RELATED METHOD FOR PROCESSING INFORMATION AND COMPUTER PROGRAM

(30) Priorité: 26.01.2017 FR 1700082
(43) Date de publication de la demande: 01.08.2018
(73) Titulaire: Thales, 92400 Courbevoie (FR)
(72) Inventeur: THERRAT, Cyril, 31036 Toulouse (FR); PATAU, Laurent, 31036 Toulouse (FR)
(74) Mandataire: Lavoix

(56) Documents cités:
- US-A1- 2007 264 953
- US-B1- 7 873 024

## Description

La présente invention concerne une passerelle électronique de communication destinée à être embarquée à bord d'un aéronef et configurée pour communiquer avec un système électronique externe, disposé à l'extérieur de l'aéronef, lesdites informations étant échangées sous forme d'ondes radioélectriques entre le système externe et l'aéronef.

La passerelle électronique de communication comprend un module d'acquisition configuré pour acquérir des informations de la part du système externe, et un module de transmission configuré pour transmettre des informations acquises à destination d'un système avionique embarqué à bord de l'aéronef.

L'invention concerne également une installation avionique de communication destinée à être embarquée à bord d'un aéronef, l'installation avionique de communication comprenant un ensemble de système(s) avionique(s) et une telle passerelle électronique de communication reliée à l'ensemble de système(s) avionique(s).

L'invention concerne également un procédé de traitement d'informations, le procédé étant mis en oeuvre par une telle passerelle électronique de communication.

L'invention concerne également un programme d'ordinateur comportant des instructions logicielles qui, lorsqu'elles sont exécutées par un ordinateur, mettent en oeuvre un tel procédé de traitement d'informations.

L'invention concerne le domaine des communications à bord d'un aéronef, en particulier lors de la mise sous tension de systèmes avioniques à bord de l'aéronef.

L'invention concerne alors plus particulièrement le domaine des équipements de communication avioniques, installés à bord d'aéronefs, qui sont alors de préférence conformes à la norme ARINC 664.

US 2007/264953 A1 décrit une passerelle électronique de communication destinée à être embarquée à bord d'un aéronef et configurée pour communiquer avec un système électronique externe disposé à l'extérieur de l'aéronef.

US 7 873 024 B1 décrit une passerelle électronique de communication au sein d'un ordinateur et configurée pour communiquer avec un système électronique externe.

On connaît une passerelle de communication du type précité. Cette passerelle de communication est embarquée à bord d'un aéronef, et permet à l'aéronef de communiquer avec un système électronique externe disposé à l'extérieur de l'aéronef, les informations étant alors échangées sous forme d'ondes radioélectriques entre le système externe et l'aéronef.

La passerelle de communication forme alors une interface de communication entre ledit système électronique externe et un ou plusieurs systèmes avioniques embarqués à bord de l'aéronef.

La passerelle de communication comprend généralement en outre un pare-feu informatique (de l'anglais *firewall*) configuré pour filtrer les informations provenant du système externe, afin que les échanges de données entre systèmes avioniques embarqués à bord de l'aéronef soient sécurisés vis-à-vis du domaine extérieur à l'aéronef. La passerelle de communication délimite alors deux domaines de communication, à savoir d'une part un domaine sécurisé avionique, également appelé domaine ACD (de l'anglais *Aircraft Control Domain*), et d'autre part, un domaine non-sécurisé intermédiaire, également appelé AISD (de l'anglais *Aircraft Information Service Domain*). La passerelle de communication sert alors à sécuriser les flux de données entrants, c'est-à-dire les flux de données depuis l'extérieur de l'aéronef à destination d'un ou plusieurs systèmes avioniques embarqués à bord de l'aéronef.

Cependant, une telle passerelle de communication est d'usage relativement restreint, et sert seulement d'interface entre un domaine de communication interne à l'aéronef et le domaine extérieur à l'aéronef.

Le but de l'invention est alors de proposer une passerelle électronique de communication, et un procédé associé, permettant d'offrir une fonctionnalité supplémentaire, et de faciliter alors l'initialisation d'un ou plusieurs systèmes avioniques à bord de l'aéronef.

A cet effet, l'invention a pour objet une passerelle électronique de communication du type précité, selon la revendication 1.

La passerelle électronique de communication selon l'invention permet alors en outre d'acquérir, lors de sa mise sous tension et de la part du système externe, une date courante, puis de transmettre cette date courante à destination d'un système avionique correspondant, afin de faciliter l'initialisation dudit système avionique.

En effet, certains systèmes avioniques, tels qu'un système de gestion de vol, également appelé FMS (de l'anglais *Flight Management System*), un récepteur pour système de positionnement par satellite, également appelé récepteur GNSS (de l'anglais *Global Navigation Satellite System*), nécessitent de connaitre la date courante lors de leur initialisation, afin de pouvoir s'initialiser correctement.

Avec la passerelle de communication de l'état de la technique, la connaissance de cette date courante nécessite alors généralement une initialisation manuelle de la part d'un membre de l'équipage, ou bien la présence d'une horloge électronique dédiée, alimentée par une batterie autonome et apte à transmettre la date courante à ces systèmes avioniques lors de leur initialisation. Une telle horloge dédiée nécessite en outre une maintenance régulière pour vérifier l'état de sa batterie.

Suivant d'autres aspects avantageux de l'invention, la passerelle électronique de communication est selon la revendication 2 ou 3.

L'invention a également pour objet une installation avionique de communication destinée à être embarquée à bord d'un aéronef selon la revendication 4.

Suivant d'autres aspects avantageux de l'invention, l'installation avionique de communication est selon l'une quelconque des revendications 5 à 9.

L'invention a également pour objet un procédé de traitement d'informations selon la revendication 10.

L'invention a également pour objet un programme d'ordinateur comportant des instructions logicielles qui, lorsqu'elles sont exécutées par un ordinateur, mettent en oeuvre un procédé tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'une installation avionique de communication embarquée à bord d'un aéronef, et apte à communiquer avec un système électronique externe disposé à l'extérieur de l'aéronef, telle qu'une station de base disposée au sol ;
- la figure 2 est un organigramme d'un procédé de traitement d'informations selon l'invention.

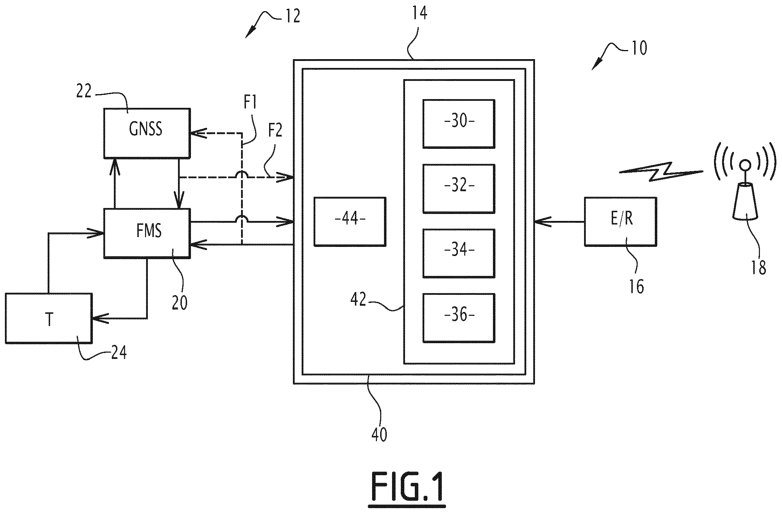

Sur la figure 1, une installation avionique de communication 10, destinée à être embarqué à bord d'un aéronef, comprend un ensemble de système(s) avionique(s) 12, une passerelle électronique de communication 14 reliée à l'ensemble de système(s) avionique(s) 12, et un émetteur-récepteur 16 connecté à la passerelle de communication 14 et apte à échanger des données sous forme d'ondes radioélectriques avec un système électronique externe 18, disposé à l'extérieur de l'aéronef.

L'installation avionique de communication 10 est par exemple conforme à la norme ARINC 664, et l'ensemble de système(s) avionique(s) 12, la passerelle électronique de communication 14 et l'émetteur-récepteur 16 sont alors reliés entre eux par des liaisons de communication conformes à la norme ARINC 664, telles qu'un réseau de communication conforme à la norme ARINC 664. En particulier, l'installation avionique de communication 10 est une installation AFDX (de l'anglais *Avionics Full-Duplex Switched Ethernet*), l'ensemble de système(s) avionique(s) 12 et la passerelle électronique de communication 14 étant reliés entre eux par des liaisons AFDX, telles qu'un réseau AFDX.

En variante, l'installation avionique de communication 10 est conforme à la norme ARINC 429, l'ensemble de système(s) avionique(s) 12 et la passerelle électronique de communication 14 étant alors reliés entre eux par des liaisons de communication conformes à la norme ARINC 429, telles qu'un réseau de communication conforme à la norme ARINC 429.

En variante encore, l'installation avionique de communication 10 est conforme à la norme Ethernet, et l'ensemble de système(s) avionique(s) 12, la passerelle électronique de communication 14 et l'émetteur-récepteur 16 sont alors reliés entre eux par des liaisons Ethernet, telles qu'un réseau Ethernet.

L'ensemble de système(s) avionique(s) 12 comporte un système de gestion de vol 20, également appelé FMS, la passerelle de communication 14 étant reliée au système de gestion de vol 20.

En complément facultatif, l'ensemble de système(s) avionique(s) 12 comporte en outre un système de positionnement par satellites 22, la passerelle électronique de communication 14 étant reliée au système de positionnement par satellites 22.

En complément facultatif, l'ensemble de système(s) avionique(s) 12 comporte en outre un système électronique d'horloge 24 connecté au système de gestion de vol 20.

La passerelle de communication 14 est destinée à être embarquée à bord de l'aéronef et est configurée pour communiquer avec le système électronique externe 18, par exemple via l'émetteur-récepteur 16. La passerelle de communication 14 est de préférence conforme à la norme ARINC 664, telle qu'une passerelle de communication AFDX. En variante, la passerelle de communication 14 est conforme à la norme ARINC 429, ou encore à la norme Ethernet.

La passerelle de communication 14 comprend un module d'acquisition 30 configuré pour acquérir des informations de la part du système externe 18, et un module de transmission 32 configuré pour transmettre des informations acquises à destination d'un système avionique 20, 22 embarqué à bord de l'aéronef.

Selon l'invention, le module d'acquisition 30 est configuré en outre pour acquérir, de la part du système externe 18, une date courante à la mise sous tension de la passerelle 14. Le module de transmission 32 est alors configuré pour transmettre la date courante acquise à destination du système avionique 20, 22, pour l'initialisation dudit système avionique 20, 22.

Par « date », notamment pour la date courante, en particulier la date locale ou encore la date UTC, on entend un instant temporel défini de manière unique, c'est-à-dire un jour et une heure.

Par « date locale », on entend une date définie de manière locale et sans référence par rapport au temps universel coordonné ou à un fuseau horaire donné, en particulier sans que le dispositif fournissant cette date sache à quel fuseau horaire correspond ladite date locale.

En complément facultatif, la passerelle de communication 14 comprend en outre un module de calcul 34 configuré pour calculer une date UTC à partir d'une date locale, lorsque la date courante acquise est la date locale. La date UTC est également appelée date en temps universel coordonné (de l'anglais *Coordinated Universal Time*).

En complément facultatif, la passerelle de communication 14 comprend en outre un module de réception 36 notamment configuré pour recevoir une position courante de l'aéronef, de la part dudit système de positionnement par satellites 22 et suite à son initialisation, lors de laquelle le système de positionnement par satellites 22 a reçu la date courante de la part de la passerelle de communication 14.

La passerelle de communication 14 comprend en outre un pare-feu informatique, non représenté, configuré pour filtrer les informations provenant du système externe 18. La passerelle de communication 14 est alors également appelée serveur de sécurité.

La passerelle de communication 14 est par exemple à l'interface entre deux domaines de communication, à savoir d'une part un domaine sécurisé avionique, également appelé domaine ACD, et d'autre part, un domaine non-sécurisé intermédiaire, également appelé AISD.

Dans l'exemple de la figure 1, la passerelle de communication 14 comporte une unité de traitement d'informations 40 formée par exemple d'une mémoire 42 associée à un processeur 44.

L'émetteur-récepteur 16 est un émetteur-récepteur radioélectrique, par exemple propre à communiquer avec une station de base d'un réseau de téléphonie cellulaire. L'émetteur-récepteur 16 est alors par exemple conforme à une norme de téléphonie cellulaire, telle que la norme LTE (de l'anglais *Long Term Evolution*) ou la norme UMTS (de l'anglais *Universal Mobile Telecommunications System*). En variante ou en complément, l'émetteur-récepteur 16 est conforme la norme IEEE 802.11, également appelée norme Wi-Fi™, ou encore à la norme IEEE 802.15, également appelée norme Bluetooth®.

Dans l'exemple de la figure 1, l'émetteur-récepteur 16 est un dispositif électronique distinct de la passerelle de communication 14. L'émetteur-récepteur 16 est alors relié à la passerelle de communication 14, par exemple via une liaison Ethernet. En variante, non représentée, l'émetteur-récepteur 16 est intégré dans la passerelle de communication 14, et la passerelle de communication 14 est alors configurée pour communiquer directement, via son émetteur-récepteur interne, avec le système électronique externe 18.

Le système électronique externe 18 est par exemple une station de base d'un réseau de téléphonie cellulaire, c'est-à-dire une station de base d'un réseau de radiocommunication conforme à une norme de téléphonie cellulaire, telle que la norme LTE ou la norme UMTS.

Le système de gestion de vol 20 est configuré pour transmettre, au système de positionnement par satellites 22, la date courante reçue de la part de la passerelle électronique de communication 14, pour l'initialisation dudit système de positionnement par satellites 22.

Le système de gestion de vol 20 est aussi configuré pour recevoir une position courante de l'aéronef, de la part dudit système de positionnement par satellites 22 et suite à son initialisation, lors de laquelle le système de positionnement par satellites 22 a reçu la date courante de la part de la passerelle de communication 14, éventuellement via le système de gestion de vol 20.

En complément facultatif, le système de gestion de vol 20 est alors configuré pour transmettre, à l'ensemble de système(s) avionique(s) 12 et/ou à la passerelle électronique de communication 14, la position courante de l'aéronef, reçue de la part du système de positionnement par satellites 22.

Le système de positionnement par satellites 22 est, par exemple, un récepteur pour système de positionnement par satellite, également appelé récepteur GNSS. Dans l'exemple de la figure 1, le système de positionnement par satellites 22 est connecté à la fois au système de gestion de vol 20 et à la passerelle électronique de communication 14.

Dans l'exemple de la figure 1, le module d'acquisition 30, le module de transmission 32, ainsi qu'en complément facultatif le module de calcul 34 et le module de réception 36, sont réalisés chacun sous forme d'un logiciel exécutable par le processeur 44. La mémoire 42 de la passerelle de communication 14 est alors apte à stocker un logiciel d'acquisition configuré pour acquérir des informations de la part du système externe 18 et un logiciel de transmission configuré pour transmettre des informations acquises à destination d'un système avionique 20, 22 embarqué à bord de l'aéronef, ainsi qu'en complément facultatif un logiciel de calcul configuré pour calculer une date UTC à partir d'une date locale, lorsque la date courante acquise est la date locale, et un logiciel de réception configuré pour recevoir, de la part du système de positionnement par satellites 22 et suite à son initialisation, une position courante de l'aéronef.

En variante non représentée, le module d'acquisition 30, le module de transmission 32, ainsi qu'en complément facultatif le module de calcul 34 et le module de réception 36, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Dans l'exemple de la figure 1, le module de transmission 32 est configuré pour transmettre la date courante acquise au système de gestion de vol 20, pour l'initialisation dudit système de gestion de vol 20. Le module de transmission 32 est également configuré pour transmettre la date courante acquise au système de positionnement par satellites 22 (flèche F1), pour l'initialisation dudit système de positionnement par satellites 22.

En complément facultatif, le module d'acquisition 30 est configuré en outre pour acquérir, de la part du système externe 18, une position courante de l'aéronef à la mise sous tension de la passerelle 14. Selon ce complément facultatif, le module de transmission 32 est configuré en outre pour transmettre la position courante acquise à destination dudit système avionique 20, 22, en vue de son initialisation.

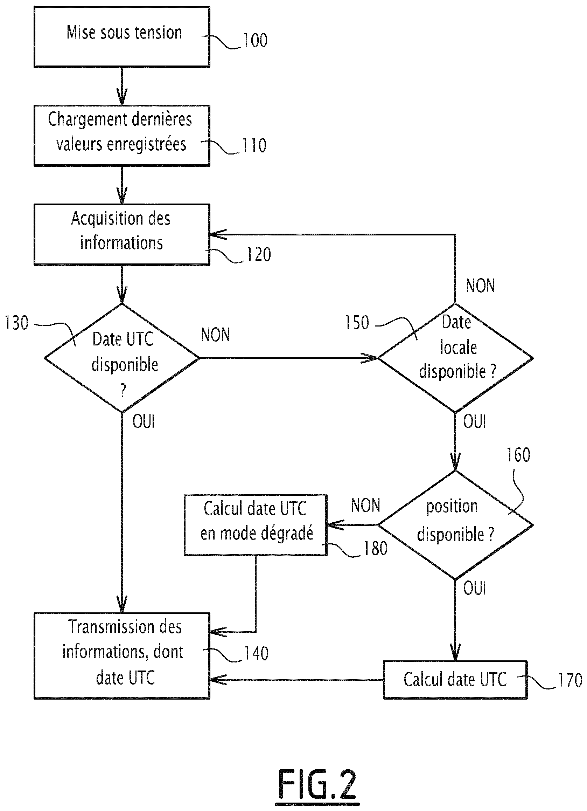

Le fonctionnement de l'installation avionique de communication 10, et en particulier de la passerelle de communication 14, va être à présent décrit plus en détail en regard de la figure 2, représentant un organigramme du procédé de procédé de traitement d'informations selon l'invention.

À chaque mise hors tension, la passerelle de communication 14 enregistre dans sa mémoire 42 la date locale et la date UTC, voire la position de l'aéronef, lorsque ces informations sont disponibles, ces informations étant par exemple fournies par le système électronique d'horloge 24, respectivement par le système de positionnement par satellites 22.

Lors d'une étape initiale 100, la passerelle de communication 14 est remise sous tension électrique.

La passerelle de communication 14 commence alors, lors de l'étape 110, par charger, c'est-à-dire par récupérer, les dernières valeurs qui ont été enregistrées le cas échéant dans la mémoire 14 à la mise hors tension ayant précédé la mise sous tension de l'étape 100. Les valeurs récupérées lors de l'étape 110 sont, par exemple, la date locale et la date UTC à la dernière mise hors tension, voire la position de l'aéronef lors de cette dernière mise hors tension.

Lors de l'étape suivante 120, la passerelle de communication 14 acquiert, via son module d'acquisition 30, la date courante, voire la position courante de l'aéronef, de la part du système électronique externe 18.

La passerelle de communication 14 vérifie ensuite, lors de l'étape suivante 130, si une date UTC a été acquise lors de l'étape 120 et est disponible pour être transmise à l'ensemble de système(s) avionique(s) 12, par exemple au système de gestion de vol 20 et au système de positionnement par satellites 22.

En cas de vérification positive lors de l'étape 130, la passerelle de communication 14 transmet alors, lors de l'étape 140 et via son module de transmission 32, les informations acquises lors de l'étape 120, en particulier la date UTC courante, voire la position courante de l'aéronef, à l'ensemble de système(s) avionique(s) 12, afin de faciliter l'initialisation des systèmes avioniques 20, 22 recevant ces informations.

Dans l'exemple de la figure 1, les informations acquises par le module d'acquisition 20 sont transmises directement au système de gestion de vol 20 par le module de transmission 32, et le système de gestion de vol 20 retransmet ces informations au système de positionnement par satellites 22, ainsi qu'au système électronique d'horloge 24.

En variante, ces informations acquises sont transmises également directement au système de positionnement par satellites 22 via le module de transmission 32, comme représenté avec la flèche F1 à la figure 1.

En cas de vérification négative lors de l'étape 130, c'est-à-dire si une date UTC n'a pas été acquise lors de l'étape 120, la passerelle de communication 14 passe à l'étape 150 pour vérifier si une date locale a été acquise lors de l'étape 120 et est disponible en vue de calcul(s) subséquent(s), tel(s) que par exemple le calcul d'une date UTC à partir de ladite date locale.

En cas de vérification négative lors de l'étape 150, c'est-à-dire si une date locale n'a également pas été acquise lors de l'étape 120 précédente, le procédé retourne à l'étape 120 afin d'acquérir à nouveau des informations de la part du système externe 18, pour essayer d'acquérir en particulier au moins une date courante parmi une date UTC et une date locale.

En cas de vérification positive lors de l'étape 150, c'est-à-dire si une date locale a été acquise lors de l'étape 120 précédente, le procédé passe à l'étape 160 afin de déterminer si une position de l'aéronef a été acquise lors de l'étape 120, et est disponible en vue de calcul(s) subséquent(s) à partir de la date locale et de la position de l'aéronef.

Si une position de l'aéronef a été acquise lors de l'étape 120 et que la vérification de l'étape 160 est donc positive, la passerelle de communication 14 calcule, lors de l'étape suivante 170 et via son module de calcul 34, la date UTC à partir de la date locale, lorsque la date courante acquise est ladite date locale.

Dans l'exemple de l'étape 170, le module de calcul 34 calcule la date UTC à partir de la date locale et de la position de l'aéronef acquises et à partir d'une table de zones de fuseaux horaires mondiaux, ladite table de zones de fuseaux horaires permettant de déterminer le fuseau horaire correspondant à la position acquise et, connaissant alors le fuseau horaire associé à la date locale acquise, de calculer la date UTC correspondant à la date locale acquise.

A l'issue de l'étape 170, la passerelle de communication 14 passe à l'étape 140 lors de laquelle son module de transmission 32 transmet les informations acquises lors de l'étape 120, en particulier la position de l'aéronef, ainsi que la date UTC calculée lors de l'étape 170, à l'ensemble de système(s) avionique(s) 12, pour faciliter l'initialisation des systèmes avioniques 20, 22 recevant ces informations.

Si aucune position de l'aéronef n'a été acquise lors de l'étape 120 et que la vérification de l'étape 160 est donc négative, la passerelle de communication 14 passe à l'étape 180 afin de calculer une date UTC en mode dégradé.

Lors de l'étape 180, le module de calcul 34 calcule une différence temporelle entre la date locale acquise lors de l'étape précédente 120 et la date locale enregistrée à la mise hors tension précédant la mise sous tension de l'étape 100, cette date locale enregistrée ayant été récupérée lors de l'étape 110. Afin d'obtenir la date UTC courante, le module de calcul 34 ajoute alors cette différence temporelle calculée à la date UTC enregistrée lors de la dernière mise hors tension et récupérée aussi lors de l'étape 110, la date UTC courante étant alors considérée égale à la somme de la dernière date UTC enregistrée et de la différence temporelle calculée.

A la fin de l'étape 180, la passerelle de communication 14 passe à l'étape 140 lors de laquelle son module de transmission 32 transmet, à l'ensemble de système(s) avionique(s) 12, la date UTC calculée lors de cette étape 180.

Ultérieurement après l'étape 140, en particulier lorsque le système de positionnement par satellites 22 a terminé son initialisation et qu'il se trouve en mode de navigation, le module de réception 36 reçoit une position courante réactualisée de l'aéronef de la part du système de positionnement par satellites 22, soit via le système de gestion de vol 20, soit directement depuis ledit système de positionnement par satellites 22 comme représenté avec la flèche F2 à la figure 1. Cette réception de la position courante réactualisée de l'aéronef est de préférence effectuée régulièrement, et permet alors de sauvegarder la position de l'aéronef à la prochaine mise hors tension de la passerelle de communication 14.

Lorsque la position de l'aéronef 10 est acquise en complément de la date courante lors de l'étape 120 de la part du système électronique externe 18, cette position est transmise au système de positionnement par satellites 22 afin qu'il puisse s'initialiser plus rapidement. Le système de positionnement par satellites 22 peut alors effectuer son initialisation dès qu'il voit un ou plusieurs satellites lorsque l'aéronef est à l'extérieur d'un bâtiment, par exemple dès que l'aéronef sort d'un hangar.

En variante, lorsque seule la date courante a été acquise lors de l'étape 120 de la part du système électronique externe 18, l'équipage de l'aéronef a néanmoins la possibilité de saisir manuellement la position de l'aéronef, afin que cette position saisie manuellement, ainsi que la date courante acquise par la passerelle de communication 14 soient transmises au système de positionnement par satellites 22. Le système de positionnement par satellites 22 peut ainsi effectuer son initialisation, y compris à l'intérieur d'un bâtiment, dans le cas où la position de l'aéronef 10 n'a pas été acquise lors de l'étape 120.

L'homme du métier observera également que la date courante est transmise par la passerelle de communication 14 à l'ensemble de système(s) avionique(s) 12 de préférence seulement lors de la phase d'initialisation faisant suite à une mise sous tension (étape 100), le système électronique d'horloge 24 prenant ensuite, en mode de fonctionnement nominal après cette phase d'initialisation, le relais de la passerelle de communication 14 pour transmettre régulièrement une date courante réactualisée aux autres systèmes 20, 22 de l'ensemble de système(s) avionique(s) 12.

On conçoit ainsi que la passerelle électronique de communication 14, et le procédé associé, permettent d'offrir une fonctionnalité supplémentaire, à savoir acquérir la date courante, voire la position courante de l'aéronef, de la part du système électronique externe 18, puis transmettre cette date courante, voire cette position courante, au(x) système(s) avionique(s) à bord de l'aéronef, tel qu'au système de gestion de vol 20 et/ou au système de positionnement par satellites 22, pour faciliter alors l'initialisation dudit ou desdits systèmes avioniques 20, 22 embarqués à bord de l'aéronef.

La passerelle électronique de communication 14, et le procédé associé, selon l'invention permettent notamment de ne plus avoir besoin d'alimenter en permanence le système électronique d'horloge 24, et ne nécessitent alors plus d'avoir une batterie autonome pour alimenter le système électronique d'horloge 24 en cas de coupure de l'alimentation par le réseau électrique de l'aéronef. L'absence de cette batterie permet alors de simplifier la maintenance, de diminuer la masse des équipements à bord de l'aéronef et d'éviter un risque d'incendie.

## Revendications

1. Passerelle électronique de communication (14) destinée à être embarquée à bord d'un aéronef et configurée pour communiquer avec un système électronique externe (18), disposé à l'extérieur de l'aéronef, lesdites informations étant échangées sous forme d'ondes radioélectriques entre le système externe (18) et l'aéronef,
la passerelle électronique de communication (14) comprenant :
- un module d'acquisition (30) configuré pour acquérir des informations de la part du système externe (18), et
- un module de transmission (32) configuré pour transmettre des informations acquises à destination d'un système avionique (20, 22) embarqué à bord de l'aéronef,
**caractérisé en ce que** le module d'acquisition (30) est configuré pour acquérir, de la part du système externe (18), une date courante à la mise sous tension de la passerelle (14), et
**en ce que** le module de transmission (32) est configuré pour transmettre la date courante acquise à destination du système avionique (20, 22), pour l'initialisation dudit système avionique (20, 22).

2. Passerelle électronique de communication (14) selon la revendication 1, dans laquelle le module d'acquisition (30) est configuré en outre pour acquérir, de la part du système externe (18), une position courante de l'aéronef à la mise sous tension de la passerelle (14), et
le module de transmission (32) est configuré en outre pour transmettre la position courante acquise à destination dudit système avionique (20, 22), en vue de son initialisation.

3. Passerelle électronique de communication (14) selon la revendication 1 ou 2, dans laquelle la passerelle de communication (14) comprend en outre un module de calcul (34) configuré pour calculer une date UTC à partir d'une date locale, lorsque la date courante acquise est une date locale.

4. Installation avionique de communication (10) destinée à être embarquée à bord d'un aéronef, l'installation avionique de communication (10) comprenant un ensemble de système(s) avionique(s) (12) et une passerelle électronique de communication (14) reliée à l'ensemble de système(s) avionique(s) (12),
**caractérisée en ce que** la passerelle électronique de communication (14) est selon l'une quelconque des revendications précédentes.

5. Installation avionique de communication (10) selon la revendication 4, dans laquelle l'ensemble de système(s) avionique(s) (12) comporte un système de gestion de vol (20), la passerelle électronique de communication (14) étant reliée au système de gestion de vol (20), et
dans laquelle le module de transmission (32) est configuré pour transmettre la date courante acquise au système de gestion de vol (20), pour l'initialisation dudit système de gestion de vol (20).

6. Installation avionique de communication (10) selon la revendication 5, dans laquelle l'ensemble de système(s) avionique(s) (12) comporte en outre un système de positionnement par satellites (22),
dans laquelle le système de gestion de vol (20) est configuré pour transmettre, au système de positionnement par satellites (22), la date courante reçue de la part de la passerelle électronique de communication (14), pour l'initialisation dudit système de positionnement par satellites (22), et
le système de gestion de vol (20) est configuré pour recevoir, de la part dudit système de positionnement par satellites (22) et suite à son initialisation, une position courante de l'aéronef.

7. Installation avionique de communication (10) selon la revendication 6, dans laquelle le système de gestion de vol (20) est configuré pour transmettre, à l'ensemble de système(s) avionique(s) (12) et/ou à la passerelle électronique de communication (14), la position courante de l'aéronef, reçue de la part du système de positionnement par satellites (22).

8. Installation avionique de communication (10) selon la revendication 4, dans laquelle l'ensemble de système(s) avionique(s) (12) comporte un système de positionnement par satellites (22), la passerelle électronique de communication (14) étant reliée au système de positionnement par satellites (22), et
dans laquelle le module de transmission (32) est configuré pour transmettre la date courante acquise au système de positionnement par satellites (22), pour l'initialisation dudit système de positionnement par satellite (22).

9. Installation avionique de communication (10) selon la revendication 8, dans laquelle la passerelle de communication (14) comprend en outre un module de réception (36) configuré pour recevoir, de la part dudit système de positionnement par satellites (22) et suite à son initialisation, une position courante de l'aéronef.

10. Procédé de traitement d'informations, le procédé étant mis en oeuvre par une passerelle électronique de communication (14) destinée à être embarquée à bord d'un aéronef et configurée pour communiquer avec un système électronique externe (18), disposé à l'extérieur de l'aéronef, lesdites informations étant échangées sous forme d'ondes radioélectriques entre le système externe (18) et l'aéronef,
le procédé comprenant :
- l'acquisition (120) d'informations de la part du système externe (18), et
- la transmission (140) des informations acquises à destination d'un système avionique (20, 22) embarqué à bord de l'aéronef,
**caractérisé en ce que**, lors de l'acquisition (120), une date courante est acquise, de la part du système externe (18), à la mise sous tension de la passerelle (14), et
lors de la transmission (140), la date courante acquise est transmise à destination du système avionique (20, 22), pour l'initialisation dudit système avionique (20, 22).

11. Programme d'ordinateur comportant des instructions logicielles qui, lorsqu'elles sont exécutées par un ordinateur, mettent en oeuvre un procédé selon la revendication précédente.

## Patentansprüche

1. Elektronisches Kommunikations-Gateway (14), das dazu vorgesehen ist, an Bord eines Flugzeugs gebracht zu werden, und zur Kommunikation mit einem außerhalb des Flugzeugs angeordneten externen elektronischen System (18) konfiguriert ist, wobei die Informationen in Form von Funkwellen zwischen dem externen System (18) und dem Flugzeug ausgetauscht werden,
wobei das elektronische Kommunikationsgateway (14) aufweist:
- ein Erfassungsmodul (30), das zum Erfassen der Informationen von dem externen System (18) konfiguriert ist, und
- ein Übertragungsmodul (32), das zum Übertragen erfasster Informationen an ein Avioniksystem (20, 22) an Bord des Flugzeugs konfiguriert ist,
**dadurch gekennzeichnet, dass** das Erfassungsmodul (30) zum Erfassen, von dem externen System (18), eines aktuellen Datums beim Hochfahren des Gateways (14) konfiguriert ist, und
dadurch, dass das Übertragungsmodul (32) konfiguriert ist, das erfasste aktuelle Datum an das Avioniksystem (20, 22) für die Initialisierung des Avioniksystems (20, 22) zu übertragen.

2. Elektronisches Kommunikationsgateway (14) nach Anspruch 1, wobei das Erfassungsmodul (30) ferner konfiguriert ist, von dem externen System (18) eine aktuelle Position des Flugzeugs beim Hochfahren des Gateways (14) zu erfassen, und
das Sendemodul (32) ferner konfiguriert ist, die ermittelte aktuelle Position an das Avioniksystem (20, 22) in Hinblick auf seine Initialisierung zu übertragen.

3. Elektronisches Kommunikations-Gateway (14) nach Anspruch 1 oder 2, wobei das Kommunikations-Gateway (14) ferner ein Berechnungsmodul (34) aufweist, das konfiguriert ist, ein UTC-Datum aus einem lokalen Datum zu berechnen, wenn das erfasste aktuelle Datum ein lokales Datum ist.

4. Avionikkommunikationsanlage (10), das dazu vorgesehen ist, an Bord eines Flugzeugs gebracht zu werden, wobei die Avionikkommunikationsanlage (10) eine Anordnung von Avioniksystem(en) (12) und ein elektronisches Kommunikationsgateway (14) aufweist, das mit der Anordnung von Avioniksystem(en) (12) verbunden ist,
**dadurch gekennzeichnet, dass** das elektronische Kommunikationsgateway (14) gemäß einem der vorhergehenden Ansprüche ist.

5. Avionikkommunikationsanlage (10) nach Anspruch 4, wobei die Anordnung von Avioniksystem(en) (12) ein Flugverwaltungssystem (20) enthält, wobei das elektronische Kommunikationsgateway (14) mit dem Flugverwaltungssystem (20) verbunden ist, und
wobei das Übertragungsmodul (32) konfiguriert ist, das erfasste aktuelle Datum an das Flugverwaltungssystem (20) für die Initialisierung des Flugverwaltungssystems (20) zu übertragen.

6. Avionikkommunikationsanlage (10) nach Anspruch 5, wobei die Anordnung von Avioniksystem(en) (12) ferner ein Satellitenpositionierungssystem (22) umfasst,
wobei das Flugmanagementsystem (20) konfiguriert ist, das von dem elektronischen Kommunikationsgateway (14) empfangene aktuelle Datum zur Initialisierung des Satellitenpositionierungssystems (22) an das Satellitenpositionierungssystem (22) zu übertragen, und
das Flugmanagementsystem (20) konfiguriert ist, von dem Satellitenpositionierungssystem (22) und nach seiner Initialisierung eine aktuelle Position des Flugzeugs zu empfangen.

7. Avionikkommunikationsanlage (10) nach Anspruch 6, wobei das Flugverwaltungssystem (20) konfiguriert ist, an die Anordnung von Avioniksystem(e) (12) und/oder an das elektronische Kommunikationsgateway (14) die von dem Satellitenpositionierungssystem (22) empfangene aktuelle Position des Flugzeugs zu übertragen.

8. Avionikkommunikationsanlage (10) nach Anspruch 4, wobei die Anordnung von Avioniksystem(en) (12) ein Satellitenpositionierungssystem (22) aufweist, wobei das elektronische Kommunikationsgateway (14) mit dem Satellitenpositionierungssystem (22) verbunden ist, und
wobei das Übertragungsmodul (32) konfiguriert ist, das erfasste aktuelle Datum an das Satellitenpositionierungssystem (22) für die Initialisierung des Satellitenpositionierungssystems (22) zu übertragen.

9. Avionikkommunikationsanlage (10) nach Anspruch 8, wobei das Kommunikationsgateway (14) ferner ein Empfangsmodul (36) aufweist, das konfiguriert ist, von dem Satellitenpositionierungssystem (22) und folgend auf seine Initialisierung eine aktuelle Position des Flugzeugs zu empfangen.

10. Informationsverarbeitungsverfahren, wobei das Verfahren durch ein elektronisches Kommunikationsgateway (14) durchgeführt wird, das dazu vorgesehen ist, an Bord eines Flugzeugs gebracht zu werden, und zur Kommunikation mit einem außerhalb des Flugzeugs angeordneten, elektronischen Elektroniksystem (18) konfiguriert ist, wobei die Informationen in Form von Funkwellen zwischen dem externen System (18) und dem Flugzeug ausgetauscht werden,
wobei das Verfahren aufweist:
- die Erfassung (120) von Informationen von dem externen System (18) und
- die Übertragung (140) der erfassten Informationen an ein Avioniksystem (20, 22) an Bord des Flugzeugs,
**dadurch gekennzeichnet, dass** während der Erfassung (120) beim Hochfahren des Gateways (14) ein aktuelles Datum von dem externen System (18) erfasst wird, und
während der Übertragung (140) das erfasste aktuelle Datum an das Avioniksystem (20, 22) für die Initialisierung des Avioniksystems (20, 22) übertragen wird.

11. Computerprogramm mit Softwareanweisungen, die, wenn sie von einem Computer ausgeführt werden, ein Verfahren gemäß dem vorhergehenden Anspruch durchführen.

## Claims

1. An electronic communication gateway (14) intended to be placed on board an aircraft and configured to communicate with an external electronic system (18), positioned outside the aircraft, said information being exchanged in the form of radio waves between the external system (18) and the aircraft,
the electronic communication gateway (14) comprising:
- an acquisition module (30) configured to acquire information from the external system (18), and
- a transmission module (32) configured to transmit the acquired information to an avionics system (20, 22) on board the aircraft,
**characterized in that** the acquisition module (30) is configured to acquire, from the external system (18), a current date upon powering on the gateway (14), and
the transmission module (32) is configured to send the acquired current date to the avionics system (20, 22), for the initialization of said avionics system (20, 22).

2. The electronic communication gateway (14) according to claim 1, wherein the acquisition module (30) is further configured to acquire, from the external system (18), a current position of the aircraft upon powering on the gateway (14), and
the transmission module (32) is further configured to send the acquired current position to said avionics system (20, 22), for the initialization of the latter.

3. The electronic communication gate (14) according to claim 1 or 2, wherein the communication gateway (14) further comprises a computation module (34) configured to compute a UTC date from a local date, when the acquired current date is a local date.

4. An avionics communication installation (10) intended to be placed on board an aircraft, the avionics communication installation (10) comprising a set of avionics system(s) (12) and an electronic communication gateway (14) connected to the set of avionics system(s) (12),
**characterized in that** the electronic communication gateway (14) is according to any one of the preceding claims.

5. The avionics communication installation (10) according to claim 4, wherein the set of avionics system(s) (12) includes a flight management system (20), the electronic communication gateway (14) being connected to the flight management system (20), and
the transmission module (32) is configured to send the acquired current date to the flight management system (20), for the initialization of said flight management system (20).

6. The avionics communication system (10) according to claim 5, wherein the set of avionics system(s) (12) further includes a satellite positioning system (22),
wherein the flight management system (20) is configured to send the satellite positioning system (22) the current date received from the electronic communication gateway (14), for the initialization of said satellite positioning system (22), and
the flight management system (20) is configured to receive, from said satellite positioning system (22) and after initialization, a current position of the aircraft.

7. The avionics communication installation (10) according to claim 6, wherein the flight management system (20) is configured to send, to the set of avionics system(s) (12) and/or to the electronic communication gateway (14), the current position of the aircraft, received from the satellite positioning system (22).

8. The avionics communication installation (10) according to claim 4, wherein the set of avionics system(s) (12) includes a satellite positioning system (22), the electronic communication gateway (14) being connected to the satellite positioning system (22), and
wherein the transmission module (32) is configured to send the acquired current date to the satellite positioning system (22), for the initialization of said satellite positioning system (22).

9. The avionics communication system (10) according to claim 8, wherein the communication gateway (14) further comprises a receiving module (36) configured to receive, from said satellite positioning system (22) and after initialization, a current position of the aircraft.

10. A method for processing information, said method being implemented by an electronic communication gateway (14) intended to be placed on board an aircraft and configured to communicate with an external electronic system (18), positioned outside the aircraft, said information being exchanged in the form of radio waves between the external system (18) and the aircraft,
the method comprising:
- the acquisition (120) of information from the external system (18), and
- the transmission (140) of the acquired information to an avionics system (20, 22) on board the aircraft,
**characterized in that**, during the acquisition (120), a current date is acquired, from the external system (18), upon powering on the gateway (14), and
during the transmission (140), the acquired current date is sent to the avionics system (20, 22), for the initialization of said avionics system (20, 22).

11. A computer program comprising software instructions which, when executed by a computer, carry out a method according to the preceding claim.
